# EUROPÄISCHE PATENTSCHRIFT

(11) **EP 0 480 514 B1**
(45) Veröffentlichungstag und Bekanntmachung des Hinweises auf die Patenterteilung: **28.12.1994**
(21) Anmeldenummer: 91202581.4
(22) Anmeldetag: 03.10.1991
(51) Int. Cl.: G11B 23/087

(54) **Kassette für einen Aufzeichnungsträger**
Cassette for a record carrier
Cassette pour un support d'enregistrement

(30) Priorität: 11.10.1990 AT 2048/90
(43) Veröffentlichungstag der Anmeldung: 15.04.1992
(73) Patentinhaber: Philips Electronics N.V., 5621 BA Eindhoven (NL)
(72) Erfinder: Vollmann, Norbert, NL-5656 AA Eindhoven (NL); Doodson, Peter John, NL-5656 AA Eindhoven (NL); Stöger, Anton, NL-5656 AA Eindhoven (NL); Bernauer, Günther, NL-5656 AA Eindhoven (NL)
(74) Vertreter: Cuppens, Hubertus Martinus Maria

(56) Entgegenhaltungen:
- EP-A- 0 218 231
- EP-A- 0 332 214
- EP-A- 0 339 651
- FR-A- 2 076 903
- GB-A- 2 163 887
- US-A- 4 779 158
- US-A- 4 853 925

## Beschreibung

Die Erfindung betrifft eine Kassette für einen Aufzeichnungsträger, der zum Aufzeichnen und/oder Wiedergeben von Aufzeichnungen mit Abtastmitteln abtastbar ist, mit einem im wesentlichen quaderförmigen Kassettengehäuse, in dem der Aufzeichnungsträger untergebracht ist und das mindestens einen Freistellbereich für den Aufzeichnungsträger aufweist, in dem die Abtastmittel mit dem Aufzeichnungsträger in Abtastverbindung bringbar sind, und mit mindestens einem an dem Kassettengehäuse parallel zu einer Verstellrichtung verstellbar geführten Verschlußschieber, der zwischen einer Abdeckposition, in der derselbe den Freistellbereich zumindest teilweise abdeckt, und einer Freigabeposition, in der derselbe den Freistellbereich freigibt, verstellbar ist, und der mindestens einen im wesentlichen parallel zu einer Hauptwand des Kassettengehäuses verlaufenden plattenförmigen Abschnitt mit einem im wesentlichen parallel zur Verstellrichtung des Verschlußschiebers verlaufenden Randbereich mit einer vorgegebenen Länge aufweist, und mit Niederhaltemitteln, die mit dem Kassettengehäuse verbunden sind und die den plattenförmigen Abschnitt in seinem Randbereich teilweise übergreifen und damit ein Abheben des plattenförmigen Abschnittes des Verschlußschiebers von der Hauptwand des Kassettengehäuses verhindern, wobei die Niederhaltemittel durch Niederhaltelappen gebildet sind, die parallel zur Verstellrichtung des Verschlußschiebers eine Abmessung aufweisen, die nur einen Bruchteil der Länge des Randbereiches des plattenförmigen Abschnittes des Verschlußschiebers beträgt, den die Niederhaltelappen übergreifen.

Eine Kassette gemäß dem eingangs angeführten Absatz ist aus der US-A-4,779, 158 bekannt. Hierbei handelt es sich um eine Kassette für einen kreisscheibenförmigen, rotierend antreibbaren Aufzeichnungsträger. Die bekannte Kassette weist in beiden Hauptwänden ihres Kassettengehäuses je einen schlitzförmigen Durchbruch als Freistellbereich auf. Durch jeden der beiden Durchbrüche ist ein optischer Kopf mit dem in dem Kassettengehäuse untergebrachten kreisscheibenförmigen Aufzeichnungsträger in Abtastverbindung bringbar. Zum Verschließen der beiden Durchbrüche ist ein U-förmiger Verschlußschieber vorgesehen. Die plattenförmigen Schenkelabschnitte des Verschlußschiebers sind je im Bereich ihrer freien Enden, also in ihrem Randbereich, teilweise von einem Niederhaltelappe überdeckt, die ein Abheben der plattenförmigen Schenkelabschnitte von den Hauptwänden der Kassette verhindert. Die Niederhaltelappen weisen dabei parallel zur Verstellrichtung des Verschlußschiebers eine solche Abmessung und Position auf, daß sowohl bei in seiner Abdeckposition als auch bei in seiner Freigabeposition befindlichem Verschlußschieber die plattenförmigen Schenkelabschnitte in ihrem Randbereich von den Niederhaltelappen teilweise übergriffen sind. Die Niederhaltelappen sind einstückig mit dem Kassettengehäuse ausgebildet, was aber einen Mehraufwand bei der Herstellung des Kassettengehäuses zur Folge hat und das Montieren des Verschlußschiebers kompliziert macht. An jede Seite der Kassette ist ein einziger Niederhaltelappe vorgesehen der parallel zur Verstellrichtung des Verschlußschiebers eine Abmessung aufweist, die nur einen Bruchteil der Länge des Randbereiches des plattenförmigen Abschnittes des Verschlußschiebers beträgt, den die Niederhaltelappen übergreifen.

Aus der EP 0 218 231 und 339 651 sind ähnlichen Kassetten bekannt für einen kreisscheibenförmigen, rotierend antreibbaren Aufzeichnungsträger. Die plattenförmigen Schenkelabschnitte des Verschlußschiebers sind je im Bereich ihrer freien Enden, also in ihrem Randbereich, ganz von einer als Niederhaltemittel vorgesehenen Druckplatte überdeckt, die ein Abheben der plattenförmigen Schenkelabschnitte von den Hauptwänden der Kassette verhindert. Die Druckplatten weisen dabei parallel zur Verstellrichtung des Verschlußschiebers eine solche Abmessung auf, daß sowohl bei in seiner Abdeckposition als auch bei in seiner Freigabeposition befindlichem Verschlußschieber die plattenförmigen Schenkelabschnitte in ihrem Randbereich von den Druckplatten ganz übergriffen sind. Die Druckplatten können z.B. durch verleimen mit dem Kassettengehäuse verbunden sein. Ein Nachteil solcher Druckplatten ist, daß Schmutz, usw., die Schiebefunktion des Schiebers beeinträchtigen können.

Die Erfindung hat sich zur Aufgabe gestellt, bei einer Kassette einer Gattung gemäß US-A 4,779,158 die vorstehend erläuterten Schwierigkeiten zu vermeiden und auf einfache Weise stets eine einwandfreie Niederhaltefunktion der Niederhaltemittel zu gewährleisten und auch die Führung des Verschlußschiebers zu verbessern. Hierfür ist die Erfindung dadurch gekennzeichnet, für den Randbereich des mindestens einen plattenförmigen Abschnitts mindestens zwei mit Abstand voneinander angeordnete Niederhaltelappen vorgesehen sind, und daß die Niederhaltelappen durch gegenüber dem Kassettengehäuse separate Teile gebildet sind, die nach dem Montieren des Verschlußschiebers am Kassettengehäuse mit dem Kassettengehäuse fix verbunden werden. Dies ist im Hinblick auf einfache, durch die Niederhaltelappen unbehinderte Montage des Verschlußschiebers am Kassettengehäuse vorteilhaft. Das Verbinden der Niederhaltelappen mit dem Kassettengehäuse kann beispielsweise durch Ultraschallschweißen erfolgen, wenn das Kassettengehäuse und die Niederhaltelappen aus Kunststoff bestehen.

Als vorteilhaft hat sich erwiesen, wenn die Niederhaltelappen im Bereich ihres vom Randbereich des plattenförmigen Abschnittes des Verschlußschiebers abgewandten Endes in Aussparungen in der Hauptwand des Kassettengehäuses, zu der der plattenförmige Abschnitt des Verschlußschiebers im wesentlichen parallel verläuft, eingesetzt sind und die Aussparungen an die Form der Niederhaltelappen angepaßt sind. Dies ist im Hinblick auf ein möglichst einfaches Anbringen der Niederhaltelappen am Kassettengehäuse vorteilhaft, wobei durch die Aussparungen auch eine Positionierung der Niederhaltelappen erreicht wird, bevor diese mit dem Kassettengehäuse fix verbunden werden.

Als vorteilhaft hat sich weiters erwiesen, wenn jeder Niederhaltelappen im Bereich seines vom Randbereich des plattenförmigen Abschnittes des Verschlußschiebers abgewandten Endes mit einem Fortsatz versehen ist, der in einem zur Verstellrichtung des Verschlußschiebers senkrechten Querschnitt in einem rechten Winkel zu dem zugehörigen Niederhaltelappen verläuft und der in eine Aufnahmeöffnung im Kassettengehäuse eingesteckt ist. Hiedurch ist ein besonders einfaches Verbinden der Niederhaltelappen mit dem Kassettengehäuse ermöglicht, wobei die Fortsätze im Zusammenwirken mit den Aufnahmeöffnungen für eine besonders genaue Positionierung der Niederhaltelappen sorgen und ein Herausgleiten der Niederhaltelappen aus den Aussparungen verhindern, solange die Niederhaltelappen noch nicht fix mit dem Kassettengehäuse verbunden sind.

Als besonders vorteilhaft hat sich dabei erwiesen, wenn der Fortsatz jedes Niederhaltelappens als parallel zur Verstellrichtung des Verschlußschiebers verlaufende Rippe ausgebildet ist, die in einen als Aufnahmeöffnung vorgesehenen Schlitz im Kassettengehäuse eingesteckt ist. Eine solche Rippe ist im Vergleich zu anderen Ausführungen von solchen Fortsätzen besonders stabil und bruchsicher, was besonders bei einer automatisierten Montage der Niederhaltelappen am Kassettengehäuse von Vorteil ist, weil dadurch die Ausschußgefahr deutlich reduziert wird.

Weiters hat sich als vorteilhaft erwiesen, wenn der plattenförmige Abschnitt des Verschlußschiebers in seinem Randbereich eine aus der Plattenebene dieses Abschnittes zum Kassettengehäuse hin versetzte Abstufung aufweist, in der Hauptwand des Kassettengehäuses eine wannenförmige Vertiefung zur Aufnahme der Abstufung des Verschlußschiebers vorgesehen ist und die Niederhaltelappen den plattenförmigen Abschnitt des Verschlußschiebers nur im Bereich der Abstufung übergreifen. Durch die Abstufung wird vorteilhafterweise eine Versteifung des Verschlußschiebers, also eine Stabilitätserhöhung für den Verschlußschieber erreicht. Weiters wird auf diese Weise ermöglicht, das vom Kassettengehäuse abgewandte Begrenzungsniveau der Niederhaltelappen und das äußere Begrenzungsniveau der vom Verschlußschieber unbedeckten Teile der Hauptwand des Kassettengehäuses niveaugleich zu machen.

Weiters hat sich bei einer erfindungsgemäßen Kassette, bei der der Verschlußschieber in einem zu seiner Verstellrichtung senkrechten Querschnitt im wesentlichen U-förmig ausgebildet ist und einen parallel zu einer Hauptwand des Kassettengehäuses verlaufenden ersten Schenkelabschnitt, der den in seinem Randbereich von den Niederhaltemitteln übergriffenen plattenförmigen Abschnitt bildet, und einen parallel zur anderen Hauptwand des Kassettengehäuses verlaufenden zweiten Schenkelabschnitt aufweist, als vorteilhaft erwiesen, wenn der parallel zur anderen Hauptwand verlaufende zweite Schenkelabschnitt in seinem Randbereich einen zur anderen Hauptwand hin rechtwinkelig abgewinkelten, parallel zur Verstellrichtung des Verschlußschiebers verlaufenden Endabschnitt aufweist und in der anderen Hauptwand eine parallel zur Verstellrichtung verlaufende Führungsnut vorgesehen ist, in die der rechtwinkelig abgewinkelte Endabschnitt des zweiten Schenkelabschnittes des Verstellschiebers zur Führung des Verstellschiebers hineinragt. Dies ist sowohl im Hinblick auf eine besonders einfache und gute Führung des Verschlußschiebers am Kassettengehäuse als auch hinsichtlich einer einfachen Montage des Verschlußschiebers am Kassettengehäuse vorteilhaft.

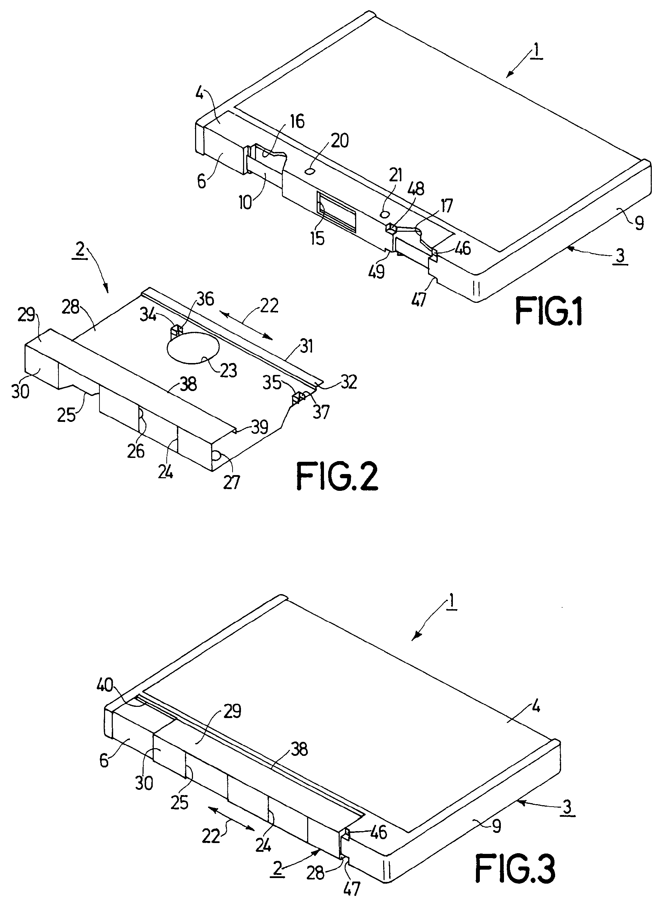

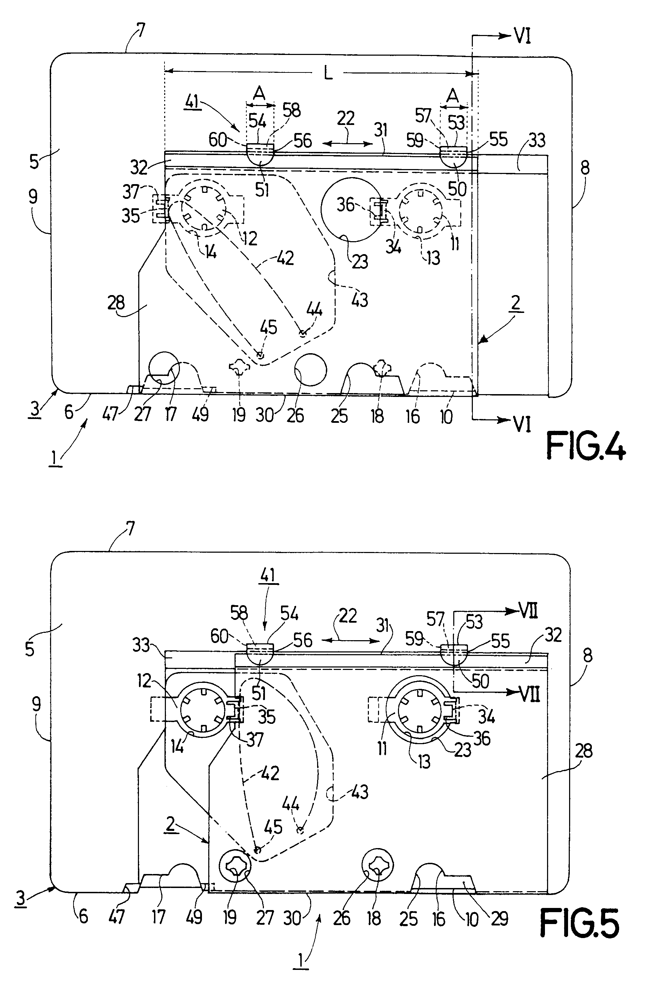

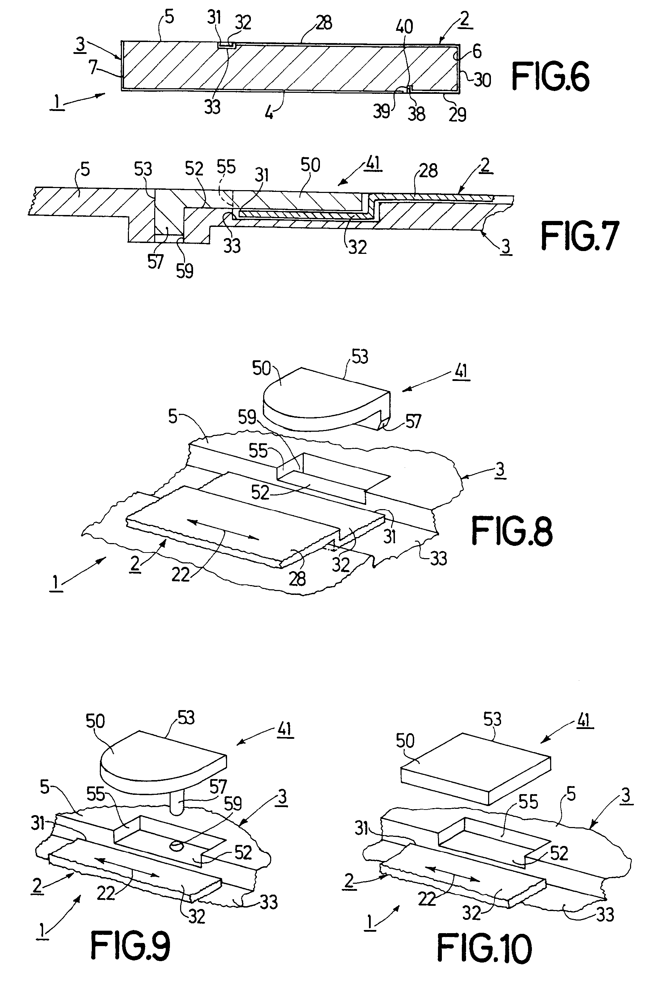

Die Erfindung wird im folgenden anhand von einigen in den Zeichnungen dargestellten Ausführungsbeispielen näher beschrieben, auf die die Erfindung jedoch nicht beschränkt sein soll. Die Fig.1 zeigt in axionometrischer Darstellungsweise eine ein Magnetband als Aufzeichnungsträger enthaltende Kassette gemäß einem ersten Ausführungsbeispiel in einem Zustand, in dem ein Verschlußschieber dieser Kassette noch nicht mit dem Kassettengehäuse derselben verbunden ist. Die Fig.2 zeigt ebenfalls in axionometrischer Darstellungsweise einen Verschlußschieber für die Kassette gemäß Fig.1. Die Fig.3 zeigt analog wie die Fig.1 die Kassette gemäß Fig.1 in einem Zustand, in dem der Verschlußschieber gemäß Fig.2 an dem Kassettengehäuse der Kassette montiert ist. Die Fig.4 zeigt die Kassette gemäß Fig.3 in einer gegenüber der Lage in Fig.3 um 180° gewendeten Lage in Draufsicht auf die bodenseitige Hauptwand dieser Kassette, wobei der Verschlußschieber der Kassette eine Abdeckposition einnimmt. Die Fig.5 zeigt analog wie die Fig.4 die Kassette gemäß den Figuren 3 und 4, wobei der Verschlußschieber der Kassette eine Freigabeposition einnimmt. Die Fig.6 zeigt in einem Schnitt längs der Linie VI-VI in Fig.4 auf schematisierte Weise die Kassette gemäß den Figuren 3 und 4. Die Fig.7 zeigt in einem Schnitt längs der Linie VII-VII in Fig.5 ein Detail der Kassette gemäß den Figuren 3, 4 und 5 in einem gegenüber Fig.5 wesentlich größeren Maßstab. Die Fig.8 zeigt das Detail gemäß Fig.7 der Kassette gemäß dem ersten Ausführungsbeispiel entsprechend den Figuren 1 bis 7, jedoch in axionometrischer Darstellungsweise. Die Fig.9 zeigt auf dieselbe Weise wie die Fig.8 ein analoges Detail einer Kassette gemäß einem zweiten Ausführungsbeispiel. Die Fig.10 zeigt auf dieselbe Weise wie die Figuren 8 und 9 ein analoges Detail einer Kassette gemäß einem dritten Ausführungsbeispiel.

Die Fig.1 zeigt eine Kassette 1 in einem Zustand, in dem ein in Fig.2 dargestellter Verschlußschieber 2 der Kassette noch nicht am Kassettengehäuse 3 der Kassette 1 montiert ist. Das Kassettengehäuse 3 der Kassette 1 ist quaderförmig ausgebildet und weist eine Deckenwand 4 und eine Bodenwand 5 als Hauptwände sowie eine längere schmale Frontwand 6, eine längere schmale Rückwand 7, eine kürzere linke Seitenwand 8 und eine kürzere rechte Seitenwand 9 auf.

Die Kassette 1 ist zur Aufnahme eines Aufzeichnungsträgers 10 vorgesehen, der in vorliegendem Fall durch ein Magnetband gebildet ist. Das Magnetband 10 ist in an sich bekannter Weise zwischen zwei rotierend antreibbaren Wickelkernen 11 und 12, von denen die zentralen Abschnitte in den Figuren 4 und 5 dargestellt sind, hin und her wickelbar. Zum Antreiben der Wickelkerne 11 und 12 dienen nicht dargestellte Wickeldorne eines Aufzeichnungs- und/oder Wiedergabegerätes, in das die Kassette 1 zum Aufzeichnen und/oder Wiedergeben von Aufzeichnungen einsetzbar ist. Die Wickeldorne 11 und 12 sind dabei durch Öffnungen 13 und 14 in der Bodenwand 5 des Kassettengehäuses 3 hindurch in das Innere der Kassette 1 einführbar und mit den Wickelkernen 11 und 12 in Antriebsverbindung bringbar.

Zum Aufzeichnen und/oder Wiedergeben von Aufzeichnungen, wie beispielsweise von Musikstücken, von Sprachdarbietungen und dergleichen, ist das Magnetband 10 mit mindestens einem als Abtastmittel vorgesehenen, nicht dargestellten Magnetkopf eines Aufzeichnungs- und/oder Wiedergabegerätes abtastbar. Um einen solchen Magnetkopf mit dem Magnetband 10 in Abtastverbindung bringen zu können, weist das Kassettengehäuse 3 der Kassette 1 einen Freistellbereich auf, in dem der Magnetkopf mit dem Magnetband 10 in Abtastverbindung bringbar ist. Dieser Freistellbereich ist bei der vorliegenden Kassette 1 im wesentlichen durch eine in der Frontwand 6 des Kassettengehäuses 3 vorgesehene rechteckförmige Öffnung 15 gebildet, in der das Magnetband 10 verläuft.

Beim Aufzeichnen und/oder Wiedergeben von Aufzeichnungen wird das Magnetband 10 mit konstanter Fortbewegungsgeschwindigkeit an dem durch die Öffnung 15 hindurch mit dem Magnetband 10 in Abtastverbindung stehenden Magnetkopf entlang bewegt. Zum Antreiben des Magnetbandes 10 mit konstanter Fortbewegungsgeschwindigkeit wirken mit dem Magnetband 10 zwei je mit konstanter Drehzahl angetriebene Antriebswellen eines Aufzeichnungs- und/oder Wiedergabegerätes zusammen, gegen die das Magnetband 10 mit zwei verstellbaren und drehbar gelagerten Andruckrollen des Aufzeichnungs- und/oder Wiedergabegerätes angedrückt wird. Um den Antriebswellen und den Andruckrollen den Zutritt zu dem Magnetband 10 zu ermöglichen, weist das Kassettengehäuse 3 zwei weitere Öffnungen 16 und 17 auf, die sich beide von der Deckenwand 4 über die Frontwand 6 zur Bodenwand 5 des Kassettengehäuses 3 erstrecken. Die Antriebswellen werden durch die bodenwandseitigen Anteile der Öffnungen 16 und 17 hinter das Magnetband 10 gebracht und danach wird das Magnetband 10 von den durch die frontwandseitigen Anteile der Öffnungen 16 und 17 hindurch mit dem Magnetband 10 in Kontakt gebrachten Andruckrollen gegen die Antriebswellen gedrückt.

Um die Kassette 1 nach ihrem Einführen in ein Aufzeichnungs- und/oder Wiedergabegerät genau in ihrer Betriebsposition positionieren zu können, weist die Kassette 1 in ihrer Bodenwand 5 zwei im wesentlichen sternförmige Positionieröffnungen 18 und 19 auf. In diese Positionieröffnungen 18 und 19 sind der Form dieser Positionieröffnungen entsprechend geformte Positionierstifte eines Aufzeichnungs- und/oder Wiedergabegerätes einführbar. Den Positionieröffnungen 18 und 19 in der Bodenwand 5 liegen in der Deckenwand 4 zwei weitere Öffnungen 20 und 21 gegenüber, in die die dünnen zylindrischen freien Enden der Positionierstifte einführbar sind, wenn die Positionierstifte tatsächlich so lange ausgebildet sind, was aber nicht der Fall sein muß.

Die Kassette 1 weist somit eine Reihe von Öffnungen auf, nämlich die Öffnungen 13, 14, 15, 16, 17, 18, 19, 20 und 21. Durch diese Öffnungen könnten ohne weitere Vorkehrungen Schmutzpartikel leicht in das Kassetteninnere gelangen, was eine Verschmutzung zur Folge hätte, die sich insbesondere dann störend auswirkt, wenn sich die in das Kassetteninnere eingedrungenen Schmutzpartikel am Magnetband ablagern, da dies eine Verschlechterung der Aufnahme- und Wiedergabequalität und auch eine Verschmutzung und Beschädigung des mit dem Magnetband zusammenwirkenden Magnetkopfes zur Folge hat. Auch kann es durch einen Teil dieser Öffnungen leicht zu einer mechanischen Beschädigung des Magnetbandes 10 kommen.

Um diesen Gefahren vorzubeugen, ist die Kassette 1 mit dem Verschlußschieber 2 versehen, der an dem Kassettengehäuse 3 parallel zu einer Verstellrichtung, die mit einem Doppelpfeil 22 angegeben ist, verstellbar geführt ist. Der Verschlußschieber 2 ist zwischen einer in den Figuren 3 und 4 dargestellten Abdeckposition und einer in Fig.5 dargestellten Freigabeposition verstellbar. In seiner Abdeckposition deckt der Verschlußschieber 2 die Öffnungen 13, 14, 15, 16, 17, 18, 19, 20 und 21 und damit auch den Freistellbereich für das Magnetband 10 im Bereich der Öffnung 15, in dem ein Magnetkopf mit dem Magnetband 10 in Abtastverbindung bringbar ist, zur Gänze ab, so daß die Kassette 1 im wesentlichen relativ dicht abgeschlossen ist und Schmutzpartikel nicht ohne weiteres in das Kassetteninnere eindringen können. In seiner Freigabeposition gibt der Verschlußschieber 2 die Öffnungen 13, 14, 15, 16, 17, 18 und 19 und somit auch den erwähnten Freistellbereich, in dem ein Magnetkopf mit dem Magnetband 10 in Abtastverbindung bringbar ist, frei. Hiefür weist der Verschlußschieber 2, der zweckmäßigerweise als Blechteil aus einem dünnen Stahlblech ausgebildet ist, zu den Öffnungen 13, 15, 16, 18 und 19 im Kassettengehäuse 3 korrespondierende Öffnungen 23, 24, 25, 26 und 27 auf. Zu den Öffnungen 14 und 17 im Kassettengehäuse 3 weist der Verschlußschieber 2 keine korrespondierenden Öffnungen auf, weil die äußeren Konturen des Verschlußschiebers 2 so ausgebildet sind, daß der Verschlußschieber 2 ohne das Vorsehen von separaten Öffnungen in demselben in seiner Freigabeposition die Öffnungen 14 und 17 im Kassettengehäuse 3 freigibt.

Der Verschlußschieber 2 ist in einem zu seiner Verstellrichtung 22 senkrechten Querschnitt im wesentlichen U-förmig ausgebildet. Der Verschlußschieber 2 weist einen parallel zur Bodenwand 5 des Kassettengehäuses 3 verlaufenden ersten Schenkelabschnitt 28, der im wesentlichen plattenförmig ausgebildet ist, und einen parallel zur Deckenwand 4 des Kassettengehäuses 3 verlaufenden zweiten Schenkelabschnitt 29 auf. Diese beiden Schenkelabschnitte 28 und 29 sind über einen parallel zur Frontwand 6 des Kassettengehäuses 3 verlaufenden Stegabschnitt 30 miteinander verbunden.

Der erste Schenkelabschnitt 28, der durch einen plattenförmigen Abschnitt gebildet ist, weist einen parallel zur Verstellrichtung 22 verlaufenden Randbereich 31 mit einer vorgegebenen Länge L auf. In diesem Randbereich 31 weist der plattenförmige erste Schenkelabschnitt 28 des Verschlußschiebers 2 eine aus der Plattenebene dieses Abschnittes 28 zum Kassettengehäuse 3 hin versetzte Abstufung 32 auf. Dabei ist in der Bodenwand 5 des Kassettengehäuses 3 eine wannenförmige Vertiefung 33 zur Aufnahme der Abstufung 32 des Verschlußschiebers 2 vorgesehen.

Der plattenförmige erste Schenkelabschnitt 28 des Verschlußschiebers 2 weist zwei von diesem Schenkelabschnitt 28 quer abstehende Lappen 34 und 35 auf. Jeder dieser beiden Lappen 34 und 35 ist als Blockierteil vorgesehen, der bei in seiner Abdeckposition befindlichem Verschlußschieber 2 den Bewegungsspielraum des im Kassettengehäuse 3 untergebrachten Magnetbandes 10 begrenzt. Hiefür weist jeder der beiden Lappen 34 und 35 je zwei Zinken 36 und 37 auf. Die Lappen 34 und 35 mit ihren Zinken 36 und 37 ragen durch die Öffnungen 13 und 14 in der Bodenwand 5 des Kassettengehäuses 3 hindurch in das Kassetteninnere. In der Abdeckposition des Verschlußschiebers 2 wirken die Zinken 36 und 37 mit nicht dargestellten Verzahnungen an den Wickelkernen 11 und 12 für das Magnetband 10 zusammen und blockieren auf diese Weise die Wickelkerne 11 und 12 gegen Verdrehen.

Der Verschlußschieber 2 ist senkrecht zur Deckenwand 4 und Bodenwand 5 dadurch geführt, daß die beiden Schenkelabschnitte 28 und 29 des Verschlußschiebers 2 an der Bodenwand 5 bzw. der Deckenwand 4 gleitend anliegen. Um den Verschlußschieber 2 auch senkrecht zur Frontwand 6 zu führen, weist der parallel zur Deckenwand 4 verlaufende zweite Schenkelabschnitt 29 des Verschlußschiebers 2 in seinem Randbereich 38 einen zur Deckenwand 4 hin rechtwinkelig abgewinkelten, parallel zur Verstellrichtung 22 des Verschlußschiebers 2 verlaufenden leistenförmigen Endabschnitt 39 auf und ist in der Deckenwand 4 des Kassettengehäuses 3 eine parallel zur Verstellrichtung 22 verlaufende Führungsnut 40 vorgesehen, in die der rechtwinkelig abgewinkelte leistenförmige Endabschnitt 39 des zweiten Schenkelabschnittes 29 des Verschlußschiebers 2 zur Führung des Verschlußschiebers 2 hineinragt.

Um ein Abheben des plattenförmigen ersten Schenkelabschnittes 28 des Verschlußschiebers 2 von der Bodenwand 5 des Kassettengehäuses 3 zu verhindern, sind an der Kassette 1 Niederhaltemittel 41 vorgesehen, die mit dem Kassettengehäuse 3 verbunden sind und die den plattenförmigen ersten Schenkelabschnitt des Verschlußschiebers 2 in seinem Randbereich 31 übergreifen. Auf diese Niederhaltemittel 41 ist nachfolgend noch näher eingegangen.

Der Verschlußschieber 2 ist in Richtung zu seiner Abdeckposition von einer Feder 42 belastet, die sich am Kassettengehäuse 3 abstützt und die in einer gehäuseaußenseitigen Aussparung 43 im Kassettengehäuse 3 angeordnet ist. Diese Belastungsfeder 42 ist durch eine im wesentlichen U-förmig ausgebildete drahtförmige Biegefeder gebildet, deren beide rechtwinkelig abgewinkelte Enden 44 und 45 in Löcher in der Bodenwand 5 eingesteckt sind und sich auf diese Weise an der Bodenwand 5 abstützen. Die beiden Federenden 44 und 45 sind dabei sowohl parallel zur Verstellrichtung 22 des Verschlußschiebers 2 als auch senkrecht zu dieser Verstellrichtung 22 gegeneinander versetzt angeordnet, wodurch die Biegefeder 42 eine Vorspannung erhält, die die Kraft zur Belastung des Verschlußschiebers 2 bestimmt. Mit einem zwischen ihren beiden Federenden 44 und 45 liegenden Federabschnitt greift die U-förmige Biegefeder 42 an dem Verschlußschieber 2 an. Dabei wird der als Blockierteil vorgesehene Lappen 35 zusätzlich als Angriffsstelle für die Biegefeder 42 ausgenützt.

Die Biegefeder 42 trachtet danach, den Verschlußschieber 2 in seiner Abdeckposition zu halten. Um in einem Aufzeichnungs- und/oder Wiedergabegerät einen Aufzeichungs- und/oder Wiedergabevorgang durchführen zu können, muß der Verschlußschieber 2 aus seiner Abdeckposition entgegen der Kraft der Biegefeder 42 in seine Freigabeposition verstellt werden. Die Verstellung des Verschlußschiebers 2 in seine Freigabeposition erfolgt nach dem Einsetzen der Kassette 1 in das Aufzeichnungs- und/oder Wiedergabegerät mit Hilfe einer geräteseitigen Verstelleinrichtung, die an einem Ende des Verschlußschiebers 2 in den beiden Übergangsbereichen zwischen dem Stegabschnitt 30 und dem ersten Schenkelabschnitt 28 und zwischen dem Stegabschnitt 30 und dem zweiten Schenkelabschnitt 29 des Verschlußschiebers 2 angreift. Um dieses Angreifen der geräteseitigen Verstelleinrichtung zu ermöglichen, weist das Kassettengehäuse 3 in den beiden Übergangsbereichen zwischen der Frontwand 6 und der Bodenwand 5 bzw. zwischen der Frontwand 6 und der Deckenwand 4 beidseitig in Bezug auf die Öffnung 17 vorgesehene Ausnehmungen 46, 47, 48 und 49 auf.

Bei der vorliegenden Kassette 1 sind nunmehr in besonders vorteilhafter Weise die Niederhaltemittel 41 durch zwei mit Abstand voneinander angeordnete Niederhaltelappen 50 und 51 gebildet. Von diesen Niederhaltelappen 50 und 51 weist jeder Niederhaltelappen parallel zur Verstellrichtung 22 des Verschlußschiebers 2 eine Abmessung A auf, die nur einen Bruchteil der Länge L des Randbereiches 31 des plattenförmigen ersten Schenkelabschnittes 28 des Verschlußschiebers 2 beträgt, den die Niederhaltelappen 50 und 51 übergreifen. In dem Bereich, in dem die Niederhaltelappen 50 und 51 den plattenförmigen ersten Schenkelabschnitt des Verschlußschiebers 2 übergreifen, sind die Niederhaltelappen 50 und 51 halbkreisförmig ausgebildet; sie könnten in diesem Bereich auch eine andere Form aufweisen und beispielsweise ellipsenförmig oder winkelförmig ausgebildet sein.

Wie aus den Figuren 7 und 8 ersichtlich ist, sind die Niederhaltelappen 50 und 51 durch gegenüber dem Kassettengehäuse 3 separate Teile gebildet, die nach dem Montieren des Verschlußschiebers 2 am Kassettengehäuse 3 mit dem Kassettengehäuse 3 verbunden werden. Hiedurch kann der Verschlußschieber 2 auf einfache Weise und durch die Niederhaltelappen 50 und 51 unbehindert am Kassettengehäuse 3 montiert werden. Die Niederhaltelappen 50 und 51 können beispielsweise durch Ultraschallschweißen mit dem Kassettengehäuse 3 verbunden werden. Die Ultraschallschweißverbindung erfolgt dabei am einfachsten und günstigsten in dem unmittelbar an die wannenförmige Vertiefung 33 angrenzenden Bereich zwischen den Niederhaltelappen 50 und 51 und dem Kassettengehäuse 3, der in den Figuren 7 und 8 mit dem Bezugszeichen 52 bezeichnet ist.

Wie ebenfalls aus den Figuren 7 und 8 ersichtlich ist, sind die Niederhaltelappen 50 und 51 im Bereich ihres vom Randbereich 31 des plattenförmigen ersten Schenkelabschnittes 28 abgewandten Endes 53 bzw. 54 in Aussparungen 55 bzw. 56 in der Bodenwand 5 des Kassettengehäuses 3, zu der der plattenförmige Schenkelabschnitt 28 des Verschlußschiebers 2 im wesentlichen parallel verläuft, eingesetzt. Diese Aussparungen 55 und 56 sind an die Form der Niederhaltelappen 50 und 51 angepaßt. Dies ist im Hinblick auf ein möglichst einfaches Anbringen der Niederhaltelappen 50 und 51 am Kassettengehäuse 3 vorteilhaft, weil die Niederhaltelappen 50 und 51 einfach in die Aussparungen 55 und 56 eingesetzt werden können, was auch auf automatisierte Weise einfach möglich ist. Durch die formangepaßten Aussparungen 55 und 56 wird dabei auch eine Positionierung der Niederhaltelappen 50 und 51 erreicht, bevor diese mit dem Kassettengehäuse 3 fix verbunden werden, was auch durch Kleben erfolgen kann. Weiters ist auf diese Weise erreicht, daß das vom Kassettengehäuse 3 abgewandte Begrenzungsniveau der Niederhaltelappen 50 und 51 und das äußere Begrenzungsniveau der vom Verschlußschieber 2 unbedeckten Teile der Bodenwand 5 des Kassettengehäuses 3 niveaugleich sind.

Wie die Figuren 4, 5, 7 und 8 weiters zeigen, ist jeder Niederhaltelappen 50 bzw. 51 im Bereich seines vom Randbereich 31 des plattenförmigen ersten Schenkelabschnittes 28 des Verschlußschiebers 2 abgewandten Endes 53 bzw. 54 mit einem Fortsatz 57 bzw. 58 versehen, der in einem zur Verstellrichtung 22 des Verschlußschiebers 2 senkrechten Querschnitt in einem rechten Winkel zu dem zugehörigen Niederhaltelappen 50 bzw. 51 verläuft und der in eine Aufnahmeöffnung 59 bzw. 60 im Kassettengehäuse 3 eingesteckt ist. Dies ist im Hinblick auf ein besonders einfaches Verbinden der Niederhaltelappen 50 und 51 mit dem Kassettengehäuse 3 vorteilhaft, weil dabei die Fortsätze 57 und 58 für eine besonders genaue Positionierung der Niederhaltelappen 50 und 51 sorgen und ein Herausgleiten der Niederhaltelappen 50 und 51 aus den Aussparungen 55 und 56 verhindern, solange die Niederhaltelappen 50 und 51 noch nicht fix mit dem Kassettengehäuse 3 verbunden sind. Um ein solches Herausgleiten der Niederhaltelappen 50 und 51 zu verhindern, können die Niederhaltelappen 50 und 51 in ihrem in die Aussparungen 55 und 56 eingesetzten Bereich auch schwalbenschwanzförmig oder auf andere Art und Weise sich erweiternd ausgebildet sein.

Bei der Kassette 1 gemäß dem ersten Ausführungsbeispiel nach den Figuren 1 bis 8 ist der Fortsatz 57 bzw. 58 jedes Niederhaltelappens 50 bzw. 51 als parallel zur Verstellrichtung 22 des Verschlußschiebers 2 verlaufende Rippe ausgebildet, die in einen als Aufnahmeöffnung 59 bzw. 60 vorgesehenen Schlitz in der Bodenwand 5 des Kassettengehäuses 3 eingesteckt ist. Eine solche Rippe 57 bzw. 58 ist besonders stabil und bruchsicher, was insbesondere bei einer automatisierten Montage der Niederhaltelappen am Kassettengehäuse von Vorteil ist.

Bei der Kassette 1 gemäß dem zweiten Ausführungsbeispiel, von der ein Detail in Fig.9 dargestellt ist, ist der Fortsatz 57 jedes Niederhaltelappens 50 als senkrecht zur Bodenwand 5 verlaufender dünner kreiszylindrischer Stift ausgebildet, der in ein als Aufnahmeöffnung 59 im Kassettengehäuse 3 vorgesehenes kreiszylindrisches Loch eingesteckt ist.

Bei der Kassette 1 gemäß dem dritten Ausführungsbeispiel, von der in Fig.10 ein Detail dargestellt ist, ist jeder Niederhaltelappen 50 quaderförmig ausgebildet. Der Niederhaltelappen 50 weist also in Draufsicht die Form eines Rechteckes oder, was besonders vorteilhaft ist, die Form eines Quadrates auf. Eine solche quadratische Querschnittsform bietet den Vorteil, daß die Niederhaltelappen in vier um 90° zueinander verdrehten Positionen in eine gehäuseseitige Aussparung eingesetzt werden können. In diesem Zusammenhang ist es besonders vorteilhaft, die Niederhaltelappen als kreisscheibenförmige Teile auszubilden, weil diese dann in jeder beliebigen Position in die entsprechend geformten Aussparungen eingesetzt werden können.

Im vorstehenden sind nur Magnetbandkassetten beschrieben. Die Erfindung ist auch bei anderen Arten von Kassetten vorteilhaft einsetzbar, beispielsweise bei Kassetten mit kreisscheibenförmig ausgebildeten, plattenartigen Aufzeichnungsträgern, die auf magnetische oder optische Weise abtastbar sind.

## Patentansprüche

1. Kassette (1) für einen Aufzeichnungsträger (10), der zum Aufzeichnen und/oder Wiedergeben von Aufzeichnungen mit Abtastmitteln abtastbar ist, mit einem im wesentlichen quaderförmigen Kassettengehäuse (3), in dem der Aufzeichnungsträger (10) untergebracht ist und das mindestens einen Freistellbereich (15) für den Aufzeichnungsträger (10) aufweist, in dem die Abtastmittel mit dem Aufzeichnungsträger (10) in Abtastverbindung bringbar sind, und mit mindestens einem an dem Kassettengehäuse (3) parallel zu einer Verstellrichtung (22) verstellbar geführten Verschlußschieber (2), der zwischen einer Abdeckposition, in der derselbe den Freistellbereich (15) zumindest teilweise abdeckt, und einer Freigabeposition, in der derselbe den Freistellbereich (15) freigibt, verstellbar ist, und der mindestens einen im wesentlichen parallel zu einer Hauptwand (4, 5) des Kassettengehäuses (3) verlaufenden plattenförmigen Abschnitt (28) mit einem im wesentlichen parallel zur Verstellrichtung (22) des Verschlußschiebers (2) verlaufenden Randbereich (31) mit einer vorgegebenen Länge (L) aufweist, und mit Niederhaltemitteln (41), die mit dem Kassettengehäuse (3) verbunden sind und die den plattenförmigen Abschnitt (28) in seinem Randbereich (31) teilweise übergreifen und damit ein Abheben des plattenförmigen Abschnittes (28) des Verschlußschiebers (2) von der Hauptwand (4, 5) des Kassettengehäuses (3) verhindern, wobei die Niederhaltemittel (41) durch Niederhaltelappen (50, 51) gebildet sind, die parallel zur Verstellrichtung (22) des Verschlußschiebers (2) eine Abmessung (A) aufweisen, die nur einen Bruchteil der Länge (L) des Randbereiches (31) des plattenförmigen Abschnittes (28) des Verschlußschiebers (2) beträgt, den die Niederhaltelappen (50, 51) übergreifen, dadurch gekennzeichnet, daß für den Randbereich (31) des mindestens einen plattenförmigen Abschnitts (28) mindestens zwei mit Abstand voneinander angeordnete Niederhaltelappen (50, 51) vorgesehen sind, und daß die Niederhaltelappen (50, 51) durch gegenüber dem Kassettengehäuse (3) separate Teile gebildet sind, die nach dem Montieren des Verschlußschiebers (2) am Kassettengehäuse (3) mit dem Kassettengehäuse (3) fix verbunden werden.

2. Kassette (1) nach Anspruch 1, dadurch gekennzeichnet, daß die Niederhaltelappen (50, 51) im Bereich ihres vom Randbereich (31) des plattenförmigen Abschnittes (28) des Verschlußschiebers (2) abgewandten Endes in Aussparungen (55, 56) in der Hauptwand (4, 5) des Kassettengehäuses (3), zu der der plattenförmige Abschnitt (28) des Verschlußschiebers (2) im wesentlichen parallel verläuft, eingesetzt sind und die Aussparungen (55, 56) an die Form der Niederhaltelappen (50, 51) angepaßt sind.

3. Kassette (1) nach Anspruch 2, dadurch gekennzeichnet, daß jeder Niederhaltelappen (50, 51) im Bereich seines vom Randbereich (31) des plattenförmigen Abschnittes (28) des Verschlußschiebers (2) abgewandten Endes (53, 54) mit einem Fortsatz (57, 58) versehen ist, der in einem zur Verstellrichtung (22) des Verschlußschiebers (2) senkrechten Querschnitt in einem rechten Winkel zu dem zugehörigen Niederhaltelappen (50, 51) verläuft und der in eine Aufnahmeöffung (59) im Kassettengehäuse (3) eingesteckt ist.

4. Kassette (1) nach Anspruch 3, dadurch gekennzeichnet, daß der Fortsatz (57, 58) jedes Niederhaltelappens (50, 51) als parallel zur Verstellrichtung (22) des Verschlußschiebers (2) verlaufende Rippe (57) ausgebildet ist, die in einen als Aufnahmeöffnung vorgesehenen Schlitz (59) im Kassettengehäuse (3) eingesteckt ist.

5. Kassette (1) nach einem der vorhergehenden Ansprüche, dadurch gekennzeichnet, daß der plattenförmige Abschnitt (28) des Verschlußschiebers (2) in seinem Randbereich (31) eine aus der Plattenebene dieses Abschnittes (28) zum Kassettengehäuse (3) hin versetzte Abstufung (32) aufweist, daß in der Hauptwand (4, 5) des Kassettengehäuses (3) eine wannenförmige Vertiefung (33) zur Aufnahme der Abstufung (32) des Verschlußschiebers (2) vorgesehen ist und daß die Niederhaltelappen (50, 51) den plattenförmigen Abschnitt (28) des Verschlußschiebers (2) nur im Bereich der Abstufung (32) übergreifen.

6. Kassette nach einem der vorhergehenden Ansprüche, bei der der Verschlußschieber (2) in einem zu seiner Verstellrichtung (22) senkrechten Querschnitt im wesentlichen U-förmig ausgebildet ist und einen parallel zu einer Hauptwand (5) des Kassettengehäuses (3) verlaufenden ersten Schenkelabschnitt (28), der den in seinem Randbereich (31) von den Niederhaltemitteln (50, 51) übergriffenen plattenförmigen Abschnitt (28) bildet, und einen parallel zur anderen Hauptwand (4) des Kassettengehäuses (3) verlaufenden zweiten Schenkelabschnitt (29) aufweist, dadurch gekennzeichnet, daß der parallel zur anderen Hauptwand (4) verlaufende zweite Schenkelabschnitt (29) in seinem Randbereich (38) einen zur anderen Hauptwand (4) hin rechtwinkelig abgewinkelten, parallel zur Verstellrichtung (22) des Verschlußschiebers verlaufenden Endabschnitt (39) aufweist und daß in der anderen Hauptwand (4) eine parallel zur Verstellrichtung (22) verlaufende Führungsnut (40) vorgesehen ist, in die der rechtwinkelig abgewinkelte Endabschnitt (39) des zweiten Schenkelabschnittes (29) des Verstellschiebers (2) zur Führung des Verstellschiebers (2) hineinragt.

## Claims

1. A cassette (1) for a record carrier (10) which can be scanned by scanning means for the purpose of making and/or reproducing recordings, which cassette has a substantially rectangular cassette housing (3) accommodating the record carrier (10) and having at least one access area (15) for the record carrier (10), in which area the scanning means can be brought into scanning contact with the record carrier (10), at least one sliding cover (2) which is guided on the cassette housing (3) so as to be movable parallel to a direction (22) of movement, which cover is movable between a closed position, in which it at least partly covers the access area (15), and an open position, in which it exposes the access area (15), and comprises at least one plate-shaped portion (28) extending parallel to a main wall (4, 5) of the cassette housing (3) and having an edge zone (31) of given length (L) which extends substantially parallel to the direction (22) of movement of the sliding cover (2), and hold-down means (41) connected to the cassette housing (3) and partly engaging over the plate-shaped portion (28) in the edge zone (31) thereof, which hold-down means thus prevent the plate-shaped portion (28) of the sliding cover (2) from being lifted off the main wall (4, 5) of the cassette housing (3), the hold-down means (41) comprising hold-down members (50, 51) which parallel to the direction (22) of movement of the sliding cover (2) have a dimension (A) which is only a fraction of the length (L) of the edge zone (31) of the plate-shaped portion (28) of the sliding cover (2), over which edge zone the hold-down members (50, 51) engage, characterised in that for the edge zone (31) of the at least one plate-shaped portion (28) there are provided at least two hold-down members (50, 51) which are spaced from one another, and in that the hold-down members (50, 51) are constituted by parts which are separate from the cassette housing (3) and which are fixedly connected to the cassette housing (3) after the sliding cover (2) has been mounted on the cassette housing (3).

2. A cassette (1) as claimed in Claim 1, characterised in that at the location of the respective end which is remote from the edge zone (31) of the plate-shaped portion (28) of the sliding cover (2) the hold-down members (50, 51) engage recesses (55, 56) in the main wall (4, 5) of the cassette housing (3), to which wall the plate-shaped portion (28) of the sliding cover (2) extends substantially parallel, and the recesses (55, 56) are adapted to the shape of the hold-down members (50, 51).

3. A cassette (1) as claimed in Claim 2, characterised in that at the location of its end (53, 54) which is remote from the edge zone (31) of the plate-shaped portion (28) of the sliding cover (2) each hold-down member (50, 51) has a projection (57, 58) which, in a cross-sectional view perpendicular to the direction (22) of movement of the sliding cover (2), extends at a right angle to the associated hold-down member (50, 51) and which engages a locating aperture (59) in the cassette housing (3).

4. A cassette (1) as claimed in Claim 3, characterised in that the projection (57, 58) of each hold-down member (50, 51) is constructed as a ridge (57) which extends parallel to the direction (22) of movement of the sliding cover (2) and which engages a slot (59) formed as a locating aperture in the cassette housing (3).

5. A cassette (1) as claimed in any one of the preceding Claims, characterised in that in its edge zone (31) the plate-shaped portion (28) of the sliding cover (2) has a stepped portion (32) which is offset from the plane of the plate-shaped portion (28) towards the cassette housing (3), in that the main wall (4, 5) of the cassette housing (3) has a trough-shaped recess (33) for receiving the stepped portion (32) of the sliding cover (2), and in that the hold-down members (50, 51) engage over the plate-shaped portion (28) of the sliding cover (2) only at the location of the stepped portion (32).

6. A cassette as claimed in any one of the preceding Claims, in which the sliding cover (2) is substantially U-shaped in a cross-sectional view perpendicular to its direction (22) of movement and comprises a first flange (28), which extends parallel to a main wall (5) of the cassette housing (3) and forms the plate-shaped portion (28) over whose edge zone (31) the hold-down means (50, 51) engage, and a second flange (29), which extends parallel to the other main wall (4) of the cassette housing (3), characterised in that in its edge zone (38) the second flange (29), which extends parallel to the other main wall (4), has an end portion (39) which is right-angled relative to the other main wall (4) and extends parallel to the direction (22) of movement of the sliding cover, and in that the other main wall (4) has a guide slot (40) which extends parallel to the direction (22) of movement and is engaged by the right-angled end portion (39) of the second flange (29) of the sliding cover (2) to guide the sliding cover (2).

## Revendications

1. Cassette (1) pour un support d'enregistrement (10) qui peut être exploré pour l'enregistrement et/ou la reproduction d'enregistrement par des moyens d'exploration, comportant un boîtier de cassette (3) ayant sensiblement la forme d'un parallélépipède rectangle, dans lequel le support d'enregistrement (10) est logé et qui présente au moins une zone de dégagement (15) pour le support d'enregistrement (10), dans laquelle les moyens d'exploration peuvent être mis en liaison d'exploration avec le support d'enregistrement (10), et au moins un curseur de fermeture (2) guidé sur le boîtier de cassette (3) de façon à pouvoir être déplacé parallèlement à une direction de déplacement (22), qui peut être déplacé entre une position de recouvrement dans laquelle il libère au moins en partie la zone de dégagement (15) et une position de libération dans laquelle il dégage la zone de dégagement (15), et qui présente au moins une aile en forme de plaque (28) sensiblement parallèle à une paroi principale (4, 5) du boîtier de cassette (3), avec une zone marginale (31) sensiblement parallèle à la direction de déplacement (22) du curseur de fermeture (2) d'une longueur prédéfinie (L), et avec des moyens de maintien en position basse (41) qui sont reliés au boîtier de cassette (3) et qui chevauchent l'aile en forme de plaque (28) dans sa zone marginale (31), empêchant ainsi l'aile en forme de plaque (28) du curseur de fermeture (2) de se soulever de la paroi principale (4, 5) du boîtier de cassette (3), les moyens de maintien en position basse étant constitués par des patins de maintien en position basse (50, 51) qui présentent, parallèlement à la direction de déplacement (22) du curseur (2) une dimension (A) qui n'est qu'une fraction de la longueur (L) de la zone marginale de l'aile en forme de plaque (28) du curseur de fermeture (2) que les patins de maintien en position basse (50, 51) chevauchent, caractérisée en ce que, pour la zone marginale (31) de ladite au moins une aile en forme de plaques (28), il y a au moins deux patins de maintien en position basse (50, 51) placés à une certaine distance l'un de l'autre, et que les patins de maintien en position basse (50, 51) sont constitués par des pièces séparées du boîtier de cassette (3) qui, après le montage du curseur de fermeture (2) sur le boîtier de cassette (3), sont fixées à demeure sur le boîtier de cassette (3).

2. Cassette (1) suivant la revendication 1, caractérisée en ce que les patins de maintien en position basse (50, 51) sont placés, dans la zone de leur extrémité opposée à la zone marginale (31) de l'aile en forme de plaque (28) du coulisseau de fermeture (2), dans des évidements (55, 56) de la paroi principale (4, 5) du boîtier de cassette (3), auxquels l'aile en forme de plaque (28) du curseur de fermeture (2) est sensiblement parallèle et que les évidements (55, 56) sont adaptés à la forme des patins de maintien en position basse (50, 51).

3. Cassette (1) suivant la revendication 2, caractérisée en ce que chaque patin de maintien en position basse (50, 51) est pourvu, dans la zone de son extrémité (53, 54) opposée à la zone marginale (31) de l'aile en forme de plaque (28) du curseur de fermeture (2), d'une saillie (57, 58) qui, dans une coupe transversale perpendiculaire à la direction de déplacement (22) du curseur de fermeture (2), est à angle droit par rapport au patin de maintien en position basse (50, 51) correspondant et est logée dans une ouverture de réception (59) du boîtier de cassette (3).

4. Cassette (1) suivant la revendication 3, caractérisée en ce que la saillie (57, 58) de chaque patin de maintien en position basse (50, 51) est réalisée sous la forme d'une nervure (57) parallèle à la direction de déplacement (22) du curseur de fermeture (2), qui est logée dans une fente (59) du boîtier de cassette (3) prévue pour servir d'ouverture de réception.

5. Cassette (1) suivant l'une quelconque des revendications précédentes, caractérisée en ce que l'aile en forme de plaque (28) du curseur de fermeture (2) présente, dans sa zone marginale (31), un gradin (32) décalé depuis le plan de plaque de cette aile (28) vers le boîtier de cassette (3), en ce qu'un renfoncement (33) en forme d'auge, destiné à recevoir le gradin (32) du curseur de fermeture (2), est prévu dans la paroi principale (4, 5) du boîtier de cassette (3) et les patins de maintien en position basse (50, 51) ne chevauchent l'aile en forme de plaque (28) du curseur de fermeture (2) que dans la zone du gradin (32).

6. Cassette (1) suivant l'une quelconque des revendications précédentes, dans laquelle le curseur de fermeture (2), dans une coupe transversale perpendiculaire à sa direction de déplacement (22), est sensiblement en forme de U et comporte une première aile (28) parallèle à une paroi principale (5) du boîtier de cassette (3), qui forme l'aile en forme de plaque (28) chevauchée par les moyens de maintien en position basse (50, 51) dans sa zone marginale (31), et une deuxième aile (29) parallèle à l'autre paroi principale (4) du boîtier de cassette (3), caractérisée en ce que la deuxième aile (29) parallèle à l'autre paroi principale (4) présente, dans sa zone marginale (38), une section terminale (39) coudée à angle droit en direction de l'autre paroi principale (4) et parallèle à la direction de déplacement (22) du curseur de fermeture (2) et en ce qu'il y a dans l'autre paroi principale (4) une rainure de guidage (40) parallèle à la direction de déplacement (22), dans laquelle la section terminale (39) coudée à angle droit de la deuxième aile (29) du curseur de fermeture (2) s'engage pour guider le curseur de fermeture (2).
